(19) Europäisches Patentamt
European Patent Office
Office européen des brevets

(11) **EP 4 294 124 A1**

(12) **EUROPEAN PATENT APPLICATION**
published in accordance with Art. 153(4) EPC

(43) Date of publication:
**20.12.2023 Bulletin 2023/51**

(21) Application number: **22752906.2**

(22) Date of filing: **21.01.2022**

(51) International Patent Classification (IPC):
**H05B 6/06** $^{(2006.01)}$   **H05B 6/12** $^{(2006.01)}$

(52) Cooperative Patent Classification (CPC):
**H05B 6/06; H05B 6/12**

(86) International application number:
**PCT/KR2022/001130**

(87) International publication number:
**WO 2022/173146 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.02.2021 KR 20210019154**

(71) Applicant: **LG Electronics Inc.**
**Yeongdeungpo-gu**
**Seoul 07336 (KR)**

(72) Inventors:
• **SIM, Juyoung**
**Seoul 08592 (KR)**
• **HAN, Jinwook**
**Seoul 08592 (KR)**

(74) Representative: **Vossius & Partner**
**Patentanwälte Rechtsanwälte mbB**
**Siebertstraße 3**
**81675 München (DE)**

(54) **INDUCTION HEATING DEVICE AND METHOD FOR CONTROLLING INDUCTION HEATING DEVICE**

(57)    An induction heating device according to an embodiment comprises: a working coil which is disposed at a position corresponding to a heating area where an object to be heated is placed, and forms a load together with the object to be heated; a resonant capacitor which forms a resonant circuit together with the working coil; an inverter circuit which includes a plurality of switching elements and supplies a current to the working coil; a first voltage sensor which measures a voltage value applied to the resonant capacitor; a second voltage sensor which measures a supply voltage value supplied to the resonant circuit through the inverter circuit; and a controller which, when the working coil is in operation, calculates at least one of the resistance value of the load and the inductance of the load on the basis of the voltage value of the resonant capacitor and the supply voltage value.

FIG. 2

**Description**

[Technical Field]

The present disclosure relates to an induction heating device and a method of controlling the induction heating device.

[Background Art]

Various cooking appliances are used to heat food in households or restaurants. Conventionally, gas ovens that use gas as fuel have been widely used, but in recent years, devices that heat an object to be heated, for example, a cooking container such as a pot, using electricity without using gas have become popular.

Among methods of heating a container using electricity, an induction heating method is a method in which an eddy current is generated in a container made of a metal component using a magnetic field generated around a coil when high-frequency power of a predetermined magnitude is applied to the coil so that the object to be heated itself is heated.

An induction heating device drives a working coil by supplying current to the working coil through an inverter circuit. Also, when the working coil is driven, as an eddy current flows in an object to be heated that is disposed on the working coil, the object to be heated is heated. When the working coil is driven in this way, the amount of thermal energy supplied to the container varies according to the magnitude of power actually generated due to driving of the working coil, that is, the actual output power value of the working coil. Here, the output power value of the working coil varies due to the impedance of a load formed by the working coil and the object to be heated. Accordingly, for the induction heating device to accurately measure the output power value of the working coil, the impedance of the load should be known.

In order to calculate the impedance of the load, the conventional induction heating device samples a resonance voltage of the working coil to restore the resonance voltage and then, based on the restored resonance voltage, calculates the impedance of the load. Here, in order to accurately restore the resonance voltage, the resonance voltage should be sampled using a sampling frequency that is at least twice a frequency of the resonance voltage.

However, when the resonance voltage has a high frequency (for example, 120 kHz), a high-performance controller (for example, microcomputer) is needed to sample the resonance voltage with a sampling frequency that is at least twice the frequency of the resonance voltage. When the high-performance controller is used, the cost of the induction heating device may become too expensive.

[Disclosure]

[Technical Problem To Be Solved]

The present disclosure is directed to providing an induction heating device and a method of controlling the induction heating device that allow the impedance of a load to be accurately calculated without using a high-performance controller.

The objectives of the present disclosure are not limited to the above-mentioned objective, and other unmentioned objectives of the present disclosure and advantages thereof may be understood by the description below and should be more clearly understood from embodiments of the present disclosure. Also, it should be easily understood that the objectives and advantages of the present disclosure may be realized by the means described in the claims below and combinations thereof.

[Technical Solution]

In one embodiment of the present disclosure, an induction heating device includes a first voltage sensor configured to measure a voltage value applied to a resonant capacitor, a second voltage sensor configured to measure a supply voltage value supplied to a resonant circuit through an inverter circuit, and a controller configured to, during an operation of a working coil, calculate at least one of a resistance value of a load and an inductance of the load based on the voltage value of the resonant capacitor and the supply voltage value.

According to such a configuration, the impedance of the load can be accurately calculated without using a high-performance controller.

One embodiment of the present disclosure provides an induction heating device including a working coil disposed at a position corresponding to a heating area, where an object to be heated is placed, and configured to form a load together with the object to be heated, a resonant capacitor configured to form a resonant circuit together with the working coil, an inverter circuit configured to include a plurality of switching elements and supply a current to the working coil, a first voltage sensor configured to measure a voltage value applied to the resonant capacitor, a second voltage sensor configured to measure a supply voltage value supplied to the resonant circuit through the inverter circuit, and a controller configured to, during an operation of the working coil, calculate at least one of a resistance value of the load and an inductance of the load based on the voltage value of the resonant capacitor and the supply voltage value.

Also, in one embodiment of the present disclosure, the controller of the induction heating device may calculate a root mean square (RMS) value of a first harmonic of the current flowing in the resonant circuit based on the voltage value of the resonant capacitor, may calculate a phase of the first harmonic of the current flowing in the resonant circuit based on the voltage value of the resonant capacitor and the supply voltage value, and may calculate at least one of the resistance value of the load and the inductance of the load based on the RMS value of the first harmonic of the current flowing in the resonant circuit and the phase of the first harmonic of the current flowing in the resonant circuit.

Also, in one embodiment of the present disclosure, the controller of the induction heating device may calculate the RMS value of the first harmonic of the current flowing in the resonant circuit based on the voltage value of the resonant capacitor, a capacitance of the resonant capacitor, and a switching frequency of the switching elements included in the inverter circuit.

Also, in one embodiment of the present disclosure, the controller of the induction heating device may calculate a phase of the current flowing in the resonant circuit based on the voltage value of the resonant capacitor and may calculate the phase of the first harmonic of the current flowing in the resonant circuit based on the phase of the current flowing in the resonant circuit and the supply voltage value.

Also, in one embodiment of the present disclosure, the controller of the induction heating device may calculate the resistance value of the load based on the supply voltage value, the RMS value of the first harmonic of the current flowing in the resonant circuit, and the phase of the first harmonic of the current flowing in the resonant circuit.

Also, in one embodiment of the present disclosure, the controller of the induction heating device may calculate the inductance of the load based on the supply voltage value, the RMS value of the first harmonic of the current flowing in the resonant circuit, the phase of the first harmonic of the current flowing in the resonant circuit, the capacitance of the resonant capacitor, and the switching frequency of the switching elements included in the inverter circuit.

Another embodiment of the present disclosure provides a method of controlling an induction heating device including a working coil disposed at a position corresponding to a heating area, where an object to be heated is placed, and configured to form a load together with the object to be heated, a resonant capacitor configured to form a resonant circuit together with the working coil, an inverter circuit configured to include a plurality of switching elements and supply a current to the working coil, a first voltage sensor configured to measure a voltage value applied to the resonant capacitor, a second voltage sensor configured to measure a supply voltage value supplied to the resonant circuit through the inverter circuit, and a controller, the method including: determining, by the controller, whether the working coil is operating; measuring, by the first voltage sensor, the voltage value of the resonant capacitor; measuring, by the second voltage sensor, the supply voltage value; and calculating, by the controller, at least one of a resistance value of the load and an inductance of the load based on the voltage value of the resonant capacitor and the supply voltage value.

Also, in another embodiment of the present disclosure, the calculating, by the controller, of at least one of a resistance value of the load and an inductance of the load based on the voltage value of the resonant capacitor and the supply voltage value may include: calculating, by the controller, a root mean square (RMS) value of a first harmonic of the current flowing in the resonant circuit based on the voltage value of the resonant capacitor; calculating, by the controller, a phase of the first harmonic of the current flowing in the resonant circuit based on the voltage value of the resonant capacitor and the supply voltage value; and calculating, by the controller, at least one of the resistance value of the load and the inductance of the load based on the RMS value of the first harmonic of the current flowing in the resonant circuit and the phase of the first harmonic of the current flowing in the resonant circuit.

Also, in another embodiment of the present disclosure, the calculating, by the controller, of an RMS value of a first harmonic of the current flowing in the resonant circuit based on the voltage value of the resonant capacitor may include calculating, by the controller, an RMS value of the first harmonic of the current flowing in the resonant circuit based on the voltage value of the resonant capacitor, a capacitance of the resonant capacitor, and a switching frequency of the switching elements included in the inverter circuit.

Also, in another embodiment of the present disclosure, the calculating, by the controller, of a phase of the first harmonic of the current flowing in the resonant circuit based on the voltage value of the resonant capacitor and the supply voltage value may include: calculating, by the controller, a phase of the current flowing in the resonant circuit based on the voltage value of the resonant capacitor; and calculating, by the controller, the phase of the first harmonic of the current flowing in the resonant circuit based on the phase of the current flowing in the resonant circuit and the supply voltage value.

Also, in another embodiment of the present disclosure, the calculating, by the controller, of at least one of the resistance value of the load and the inductance of the load based on the RMS value of the first harmonic of the current flowing in the resonant circuit and the phase of the first harmonic of the current flowing in the resonant circuit may include calculating, by the controller, the resistance value of the load based on the supply voltage value, the RMS value of the first harmonic of the current flowing in the resonant circuit, and the phase of the first harmonic of the current flowing in the resonant circuit.

Also, in another embodiment of the present disclosure, the calculating, by the controller, of at least one of the resistance value of the load and the inductance of the load based on the RMS value of the first harmonic of the current flowing in the resonant circuit and the phase of the first harmonic of the current flowing in the resonant circuit may include calculating, by the controller, the inductance of the load based on the supply voltage value, the RMS value of the first harmonic of the current flowing in the resonant circuit, the phase of the first harmonic of the current flowing in the resonant circuit, a capacitance of the resonant capacitor, and a switching frequency of the switching elements included in the inverter circuit.

[Advantageous Effects]

According to an induction heating device and a method of controlling the induction heating device according to the present disclosure, since at least one of a resistance value of a load and an inductance of the load is calculated based on a voltage value of the resonant capacitor and a supply voltage value, there is an advantage that the impedance of the load can be accurately calculated without using a high-performance controller.

Also, since the induction heating device and the method of controlling the induction heating device according to the present disclosure can accurately calculate the impedance of the load, there is an advantage that the output power of the induction heating device can be more precisely controlled.

In addition, since the induction heating device and the method of controlling the induction heating device according to the present disclosure can accurately calculate the impedance of the load, there is an advantage that the temperature of a working coil can be more accurately estimated.

[Description of Drawings]

FIG. 1 is an exploded perspective view of an induction heating device according to one embodiment of the present disclosure.

FIG. 2 is a view illustrating a configuration of the induction heating device according to one embodiment of the present disclosure.

FIG. 3 is a view illustrating a circuit formed by the induction heating device according to one embodiment of the present disclosure and an object to be heated.

FIG. 4 is a view illustrating a simplified form of the circuit formed by the induction heating device according to one embodiment of the present disclosure and the object to be heated.

FIG. 5 is a graph showing a voltage applied to a resonant capacitor and a current flowing in a resonant circuit of the induction heating device according to one embodiment of the present disclosure.

FIG. 6 is a graph showing a voltage supplied to the resonant circuit, the current flowing in the resonant circuit, and a first harmonic of the current flowing in the resonant circuit of the induction heating device according to one embodiment of the present disclosure.

FIG. 7 is a flowchart illustrating a method of controlling an induction heating device according to one embodiment of the present disclosure.

FIG. 8 is a table showing a resistance value of a load, an inductance of the load, and errors thereof which are calculated through the induction heating device and the method of controlling the induction heating device according to one embodiment of the present disclosure.

[Modes of the Invention]

The objectives, features, and advantages will be described in detail below with reference to the accompanying drawings, and accordingly, those of ordinary skill in the art to which the present disclosure pertains should be able to easily practice the technical idea of the present disclosure. In describing the present disclosure, when it is determined that the detailed description of a known art related to the present disclosure may unnecessarily obscure the gist of the present disclosure, the detailed description thereof will be omitted. Hereinafter, exemplary embodiments according to the present disclosure will be described in detail with reference to the accompanying drawings. In the drawings, the same reference numbers are used to indicate the same or similar components.

Although terms such as first and second are used to describe various components, of course, the components are not limited by these terms. These terms are only used to distinguish one component from another component, and of course, a first component may also be a second component unless otherwise stated.

Hereinafter, when an arbitrary component is described as being disposed on an "upper portion (or lower portion)" of a component or being disposed "on (or under)" the component, this may not only mean that the arbitrary component is disposed in contact with an upper surface (or lower surface) of the component but may also mean that another component may be interposed between the component and the arbitrary component disposed on (or under) the component.

Also, when a certain component is described as being "connected," "coupled," or "linked" to another component, this may mean that the component is directly connected or linked to the other component but may also mean that the component is "connected," "coupled," or "linked" to the other component via another component "interposed" therebetween or the component and the other component are "connected," "coupled," or "linked" through other components.

Throughout the specification, unless otherwise stated, the number of each component may be singular or plural.

A singular expression used in one embodiment of the present disclosure includes a plural expression unless the context clearly indicates otherwise. In this application, terms such as "consist of" or "include" should not be construed as indicating that all of various components or various operations described herein are necessarily included, and should be construed as indicating that some components or some operations may not be included or additional components or operations may be further included.

Hereinafter, an induction heating device and a method of controlling the induction heating device according to some embodiments of the present disclosure will be described.

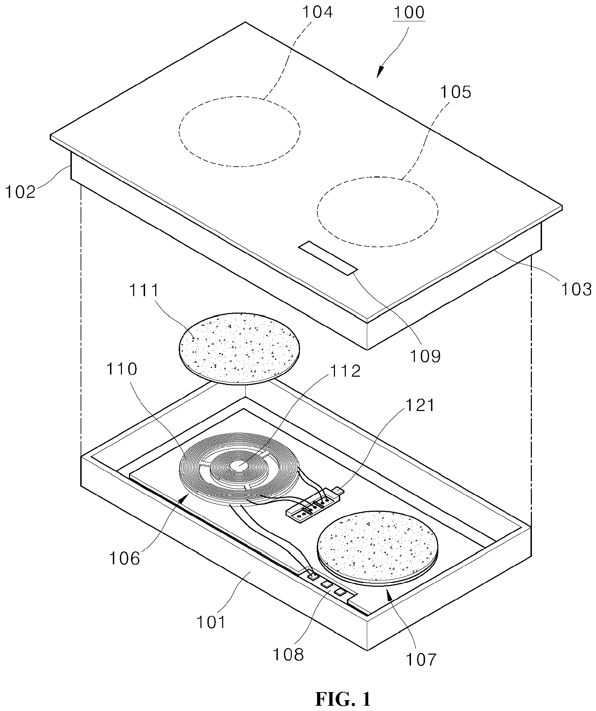

FIG. 1 is an exploded perspective view of an induction heating device according to one embodiment of the present disclosure.

Referring to FIG. 1, an induction heating device 100 according to one embodiment of the present disclosure includes a case 101 constituting a main body and a cover plate 102 coupled to the case 101 to seal the case 101.

The cover plate 102 is coupled to an upper surface of the case 101 to seal a space formed inside the case 101 from the outside. The cover plate 102 includes an upper plate portion 103 on which a container for cooking food may be placed. In one embodiment of the present disclosure, the upper plate portion 103 may be formed of a tempered glass material such as ceramic glass, but the material of the upper plate portion 103 may vary according to embodiments.

Heating areas 104 and 105 that correspond to working coil assemblies 106 and 107, respectively, are formed on the upper plate portion 103. In order to allow a user to clearly recognize the positions of the heating areas 104 and 105, lines or figures that correspond to the heating areas 104 and 105 may be printed or displayed on the upper plate portion 103.

The case 101 may have a hexahedral shape with an open upper portion. The working coil assemblies 106 and 107 for heating the container are disposed in the space formed inside the case 101. Also, an interface unit 108 having a function of allowing the user to apply power or adjust a power level of each of the heating areas 104 and 105 and a function of displaying information relating to the induction heating device 100 is provided inside the case 101. The interface unit 108 may be formed as a touch panel through which both information input and information display are possible by touch, but an interface unit 108 having a different structure may be used according to embodiments.

Also, a manipulation area 109 disposed at a position corresponding to the interface unit 108 is provided on the upper plate portion 103. Characters, images, or the like may be pre-printed on the manipulation area 109 to allow manipulation by the user. The user may perform a desired manipulation by touching a specific point of the manipulation area 109 with reference to the characters or images pre-printed on the manipulation area 109. Also, information output by the interface unit 108 may be displayed through the manipulation area 109.

The user may set a power level of each of the heating areas 104 and 105 through the interface unit 108. The power level may be indicated by numbers (for example, 1 to 9) on the manipulation area 109. When the power level for each of the heating areas 104 and 105 is set, a required power value and heating frequency of a working coil corresponding to each of the heating areas 104 and 105 are determined. Based on the determined heating frequency, a controller drives each working coil so that the actual output power value of each working coil matches the required power value set by the user.

Also, a power supply unit 121 for supplying power to the working coil assemblies 106 and 107 or the interface unit 108 is disposed in the spaced formed inside the case 101.

For reference, although two working coil assemblies, that is, a first working coil assembly 106 and a second working coil assembly 107, disposed inside the case 101 are illustrated as an example in the embodiment of FIG. 1, three or more working coil assemblies may be disposed inside the case 101 according to embodiments.

The working coil assemblies 106 and 107 include a working coil forming an induction magnetic field using a high-frequency alternating current (AC) current supplied by the power supply unit 121 and an insulation sheet for protecting a coil from heat generated by the container. For example, in FIG. 1, the first working coil assembly 106 includes a first working coil 110 for heating the container placed on the first heating area 104 and a first insulation sheet 111. Also, although not illustrated, the second working coil assembly 107 includes a second working coil and a second insulation sheet. The insulation sheet may not be disposed according to embodiments.

Also, a temperature sensor is disposed at the center of each working coil. For example, in FIG. 1, a temperature sensor 112 is disposed at the center of the first working coil 110. The temperature sensor measures the temperature of the container placed on each heating area. In one embodiment of the present disclosure, the temperature sensor may be a thermistor temperature sensor having a variable resistance whose resistance value changes according to the temperature of the container, but temperature sensor is not limited thereto.

In one embodiment of the present disclosure, the temperature sensor outputs a sensing voltage that corresponds to the temperature of the container, and the sensing voltage output from the temperature sensor is transmitted to the controller to be described below. The controller checks the temperature of the container based on the magnitude of the sensing voltage output from the temperature sensor and, when the temperature of the container is a predetermined reference value or more, performs an overheating protection operation by lowering the actual power value of the working coil or stopping the driving of the working coil.

Also, although not illustrated in FIG. 1, a board on which a plurality of circuits or elements including the controller are mounted may be disposed in the space formed inside the case 101. The controller may perform a heating operation by driving each working coil according to a heating start command of the user, which is input through the interface unit 108. When the user inputs a heating end command through the interface unit 108, the controller ends the heating operation by stopping the driving of the working coil.

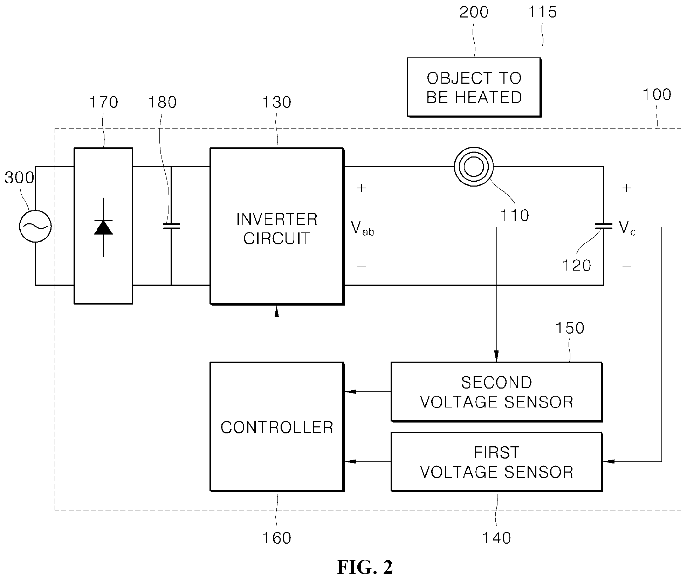

FIG. 2 is a view illustrating a configuration of the induction heating device according to one embodiment of the present disclosure.

Referring to FIG. 2, the induction heating device 100 according to one embodiment of the present disclosure includes a working coil 110, a resonant capacitor 120, an inverter circuit 130, a first voltage sensor 140, a second voltage sensor 150, and a controller 160. Also, the induction heating device 100 according to one embodiment of the present disclosure may further include a rectifying circuit 170 and a smoothing capacitor 180.

The working coil 110 is disposed at a position corresponding to the heating area 104 on which an object to be heated 200 is placed. As current flows therein, the working coil 110 heats the object to be heated through a resonant current generated between the working coil 110 and the object to be heated. The working coil 110 may receive current from the inverter circuit 130.

Here, the working coil 110 forms a load 115 together with the object to be heated 200. That is, the working coil 110 and the object to be heated 200 may act as a load including a resistor and an inductor on a circuit connected from an external power supply 300 to the working coil 110.

The resonant capacitor 120 forms a resonant circuit together with the working coil 110. One end of the resonant capacitor 120 is connected to the working coil 110, and the other end is connected to the inverter circuit 130 to be described below. Accordingly, along with the working coil 110, the resonant capacitor 120 forms a resonant circuit in which a resonant current flows due to current supplied through the inverter circuit 130.

The inverter circuit 130 includes a plurality of switching elements and supplies current to the working coil 110.

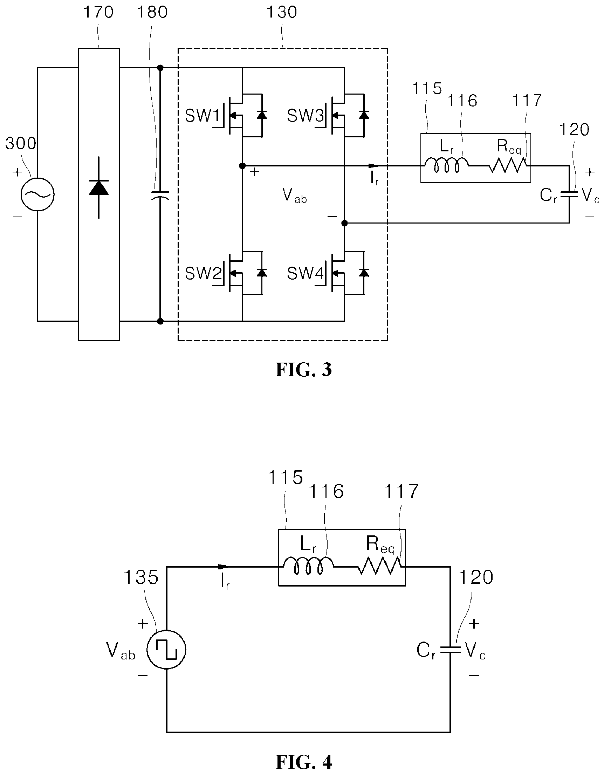

The plurality of switching elements included in the inverter circuit 130 may be turned on or off by a switching signal. Here, the switching signal may be supplied from the controller 160 to be described below or may be supplied from a driving circuit (not illustrated) due to a control signal of the controller 160. The structure of the plurality of switching elements included in the inverter circuit 130 will be described below with reference to FIG. 3.

The inverter circuit 130 converts current supplied from the external power supply 300 and supplies the current to the working coil 110. Here, the current supplied from the external power supply 300 may be rectified and smoothed through the rectifying circuit 170 and the smoothing capacitor 180 and then supplied to the inverter circuit 130.

The rectifying circuit 170 may include a plurality of diode elements, and in one embodiment of the present disclosure, the rectifying circuit 170 may be a bridge diode circuit. The rectifying circuit 170 may rectify an AC input voltage supplied from the external power supply 300 and output a voltage having a pulsating waveform.

The smoothing capacitor 180 may smooth the voltage rectified by the rectifying circuit 170 and output a direct current (DC) link voltage.

The DC link voltage input to the inverter circuit 130 is converted into AC by turn-on and turn-off operations, that is, switching operations, of the plurality of switching elements included in the inverter circuit 130. The AC obtained by conversion by the inverter circuit 130 is supplied to the resonant circuit formed by the working coil 110 and the resonant capacitor 120. Accordingly, as a resonance phenomenon occurs in the resonant circuit, an eddy current flows in the container, and the container is heated.

The first voltage sensor 140 measures a voltage value $V_c$ of the resonant capacitor 120, which is a voltage value applied to the resonant capacitor 120. Also, the first voltage sensor 140 may transmit the measured voltage value $V_c$ of the resonant capacitor 120 to the controller 160.

The second voltage sensor 150 measures a supply voltage value Vab supplied to the resonant circuit through the inverter circuit 130. Also, the second voltage sensor 150 may transmit the measured supply voltage value Vab to the controller 160.

The controller 160 controls the overall operation of the induction heating device 100. The controller 160 may be implemented by including a physical element including at least one of application specific integrated circuits (ASICs), digital signal processors (DSPs), digital signal processing devices (DSPDs), programmable logic devices (PLDs), field programmable gate arrays (FPGAs), micro-controllers, and microprocessors.

When the working coil 110 operates, the controller 160 calculates at least one of a resistance value of the load 115 and an inductance of the load 115 based on the voltage value $V_c$ of the resonant capacitor 120 and the supply voltage value Vab. A method by which the controller 160 calculates at least one of the resistance value of the load 115 and the inductance of the load 115 will be described below.

FIG. 3 is a view illustrating a circuit formed by the induction heating device according to one embodiment of the present disclosure and an object to be heated.

Referring to FIG. 3, a circuit formed by the induction heating device 100 and the object to be heated 200 can be identified.

First, the inverter circuit 130 may include a first switching element SW1, a second switching element SW2, a third switching element SW3, and a fourth switching element SW4. That is, as illustrated in FIG. 3, the inverter circuit 130 of the induction heating device 100 according to one embodiment of the present disclosure may be configured as a full bridge circuit including the four switching elements SW1, SW2, SW3, and SW4. However, in another embodiment of the present disclosure, the inverter circuit 130 may also be configured as a half bridge circuit including two switching elements. Hereinafter, description will be given based on an embodiment in which the inverter circuit 130 is configured as the full bridge circuit illustrated in FIG. 3.

The load 115 receives current from the inverter circuit 130. The load 115 may have one end connected to a node between the first switching element SW1 and the second switching element SW2 and the other end connected to a node between the third switching element SW3 and the fourth switching element SW4 through the resonant capacitor 120.

Here, the load 115 may be simulated as an inductor 116 and a resistor 117 in terms of a circuit. Therefore, by calculating a resistance value $R_{eq}$ and an inductance $L_r$ of the load 115, the controller 160 can more precisely control the output power when the object to be heated 200 is placed on the working coil 110.

Here, the circuit of FIG. 3 may be expressed as an equivalent circuit of FIG. 4.

FIG. 4 is a view illustrating a simplified form of the circuit formed by the induction heating device according to one embodiment of the present disclosure and the object to be heated.

Referring to FIG. 4, the circuit formed by the induction heating device 100 and the object to be heated 200 may be simulated as a circuit in which a supply voltage 135, the load 115, and the resonant capacitor 120 are connected in series.

The supply voltage 135 represents the same voltage as a voltage supplied to the load 115 by the external power supply 300, the rectifying circuit 170, the smoothing capacitor 180, and the inverter circuit 130.

The controller 160 may calculate the resistance value $R_{eq}$ and the inductance $L_r$ of the load 115 after assuming that the circuit formed by the induction heating device 100 and the object to be heated 200 is the same as the circuit of FIG. 4.

The controller 160 may calculate the resistance value $R_{eq}$ and the inductance $L_r$ of the load 115 in the following manner.

First, the controller 160 calculates a root mean square (RMS) value of a first harmonic of a resonant current $I_r$, which is the current flowing in the resonant circuit, based on the voltage value $V_c$ of the resonant capacitor 120. Here, the controller 160 may calculate the RMS value of the first harmonic of the resonant current $I_r$ using Equation 1 below.

[Equation 1]

$$I_{RMS(1)} = \frac{1}{\sqrt{2}} V_{c\_peak} \omega_s C_r$$

Here, $I_{RMS(1)}$ represents the RMS value of the first harmonic of the resonant current $I_r$, $V_{c\_peak}$ represents a peak value of the voltage value $V_c$ of the resonant capacitor 120, $\omega_s$ represents a switching frequency of the switching elements SW1, SW2, SW3, and SW4 included in the inverter circuit 130, and $C_r$ represents the capacitance of the resonant capacitor 120.

Here, $V_{c\_peak}$ may be calculated by detecting a peak value from a voltage value measured through the first voltage sensor 140. Also, $\omega_s$ and $C_r$ are preset values.

In this way, the controller 160 may calculate the RMS value $I_{RMS(1)}$ of the first harmonic of the resonant current $I_r$ based on the voltage value $V_c$ of the resonant capacitor 120, the capacitance $C_r$ of the resonant capacitor 120, and the switching frequency $\omega_s$ of the switching elements SW1, SW2, SW3, and SW4 included in the inverter circuit 130.

Then, the controller 160 calculates a phase of the first harmonic of the resonant current $I_r$ based on the voltage value $V_c$ of the resonant capacitor 120 and the supply voltage value $V_{ab}$.

More specifically, the controller 160 calculates the phase of the resonant current $I_r$ based on the voltage value $V_c$ of the resonant capacitor 120. Here, the voltage value $V_c$ of the resonant capacitor 120 has a relationship with the resonant current $I_r$ as shown in Equation 2 below.

[Equation 2]

$$i_r = C_r \frac{dv_c}{dt}$$

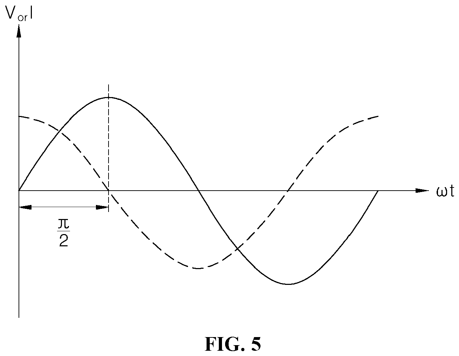

According to Equation 2, the resonant current $I_r$ has a value proportional to a differential value of the voltage value $V_c$ of the resonant capacitor 120, and this can be displayed as a graph as shown in FIG. 5.

FIG. 5 is a graph showing a voltage applied to a resonant capacitor and a current flowing in a resonant circuit of the induction heating device according to one embodiment of the present disclosure.

Referring to FIG. 5, the solid-line graph represents the voltage value $V_c$ of the resonant capacitor 120, and the dotted-line graph represents the resonant current $I_r$.

Here, it can be seen that the resonant current $I_r$ is proportional to the differential value of the voltage value $V_c$ of the resonant capacitor 120, and the phase of the resonant current $I_r$ is always 90° faster than the voltage value $V_c$ of the resonant capacitor 120.

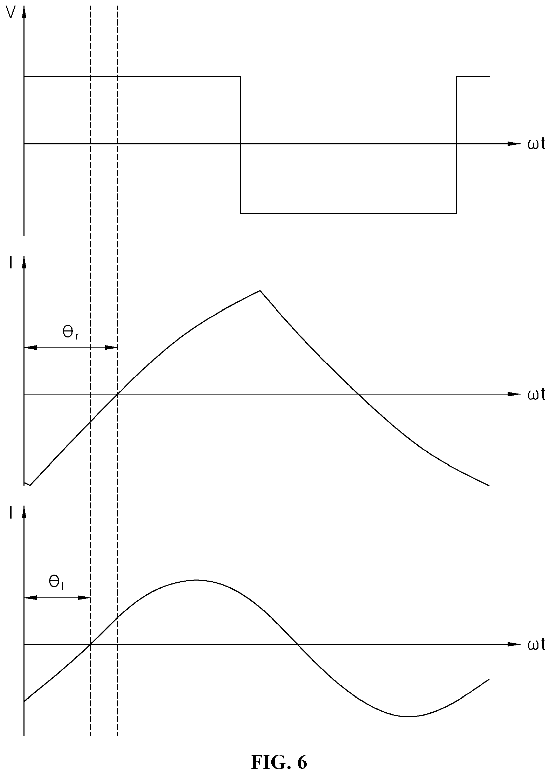

Then, the controller 160 calculates the phase of the first harmonic $I_{r(1)}$ of the resonant current $I_r$ based on the phase of the resonant current $I_r$ and the supply voltage value $V_{ab}$. Here, the relationship between the supply voltage value $V_{ab}$, the resonant current $I_r$, and the first harmonic $I_{r(1)}$ of the resonant current $I_r$ may be displayed as a graph as shown in FIG. 6.

FIG. 6 is a graph showing a voltage supplied to the resonant circuit, the current flowing in the resonant circuit, and a first harmonic of the current flowing in the resonant circuit of the induction heating device according to one embodiment of the present disclosure.

Referring to FIG. 6, a graph showing the supply voltage value $V_{ab}$ is shown at the top, a graph showing the resonant current $I_r$ is shown in the middle, and a graph showing the first harmonic $I_{r(1)}$ of the resonant current $I_r$ is shown at the bottom.

Here, the controller 160 may set a time point that precedes a time point when the resonant current $I_r$ is 0 by a phase θr of the resonant current as a time point when the supply voltage value $V_{ab}$ is converted from a negative value to a positive value (a time point when ω$_t$=0 in the graph) and may calculate a difference between the corresponding time point and a time point when the first harmonic $I_{r(1)}$ of the resonant current $I_r$ is 0 to calculate a phase $θ_1$ of the first harmonic $I_{r(1)}$ of the resonant current $I_r$.

Referring back to FIG. 4, after calculating the RMS value $I_{RMS(1)}$ of the first harmonic $I_{r(1)}$ of the resonant current $I_r$ and the phase $θ_1$ of the first harmonic $I_{r(1)}$ of the resonant current $I_r$, the controller 160 calculates at least one of the resistance value $R_{eq}$ of the load 115 and the inductance $L_r$ of the load 115 based on the RMS value $I_{RMS(1)}$ of the first harmonic $I_{r(1)}$ of the resonant current $I_r$ and the phase $θ_1$ of the first harmonic $I_{r(1)}$ of the resonant current $I_r$,

Here, the controller 160 may calculate the resistance value $R_{eq}$ of the load 115 using Equation 3 below.

[Equation 3]

$$R_{eq} = \frac{4}{\pi\sqrt{2}} V_{ab} \frac{1}{I_{RMS(1)}} \cos θ_1$$

Here, the supply voltage value $V_{ab}$ may be measured by the second voltage sensor 150. In this way, the controller 160 may calculate the resistance value $R_{eq}$ of the load 115 based on the supply voltage value $V_{ab}$, the RMS value $I_{RMS(1)}$ of the first harmonic $I_{r(1)}$ of the resonant current $I_r$, and the phase $θ_1$ of the first harmonic $I_{r(1)}$ of the resonant current $I_r$,.

Also, the controller 160 may calculate the inductance $L_r$ of the load 115 using Equation 4 below.

[Equation 4]

$$L_r = \frac{4}{\pi\sqrt{2}} V_{ab} \frac{1}{\omega_s I_{RMS(1)}} \sin\theta_1 + \frac{1}{\omega_s^2 C_r}$$

In this way, the controller 160 may calculate the inductance $L_r$ of the load 115 based on the supply voltage value $V_{ab}$, the RMS value $I_{RMS(1)}$ of the first harmonic $I_{r(1)}$ of the resonant current $I_r$, the phase $\theta_1$ of the first harmonic $I_{r(1)}$ of the resonant current $I_r$, the capacitance $C_r$ of the resonant capacitor 120, and the switching frequency $\omega_s$ of the switching elements SW1, SW2, SW3, and SW4 included in the inverter circuit 130.

In this way, because at least one of the resistance value $R_{eq}$ of the load 115 and the inductance $L_r$ of the load 115 is calculated based on the voltage value $V_c$ of the resonant capacitor 120 and the supply voltage value $V_{ab}$, the induction heating device 100 according to one embodiment of the present disclosure can accurately calculate the impedance of the load 115 without using a high-performance controller. Accordingly, the output power of the induction heating device 100 can be more precisely controlled by the controller 160, and the temperature of the working coil 110 can be more accurately estimated.

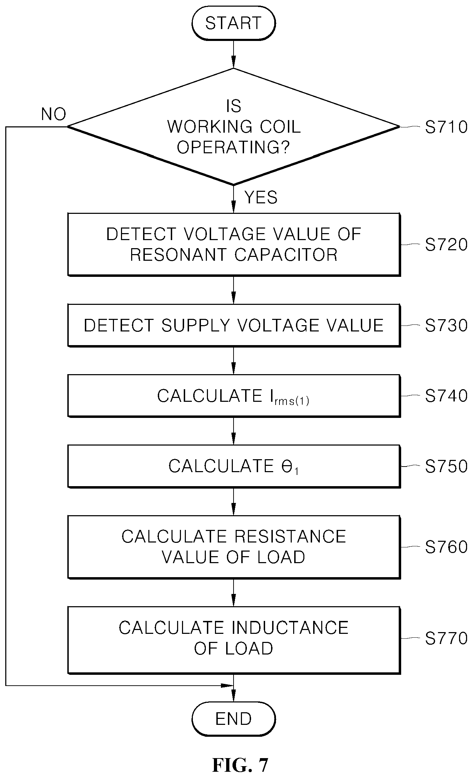

FIG. 7 is a flowchart illustrating a method of controlling an induction heating device according to one embodiment of the present disclosure.

Referring to FIG. 7, first, the controller 160 determines whether the working coil 110 is operating (S710).

When the working coil 110 is not operating, the controller 160 ends control because it is not necessary to calculate the resistance value $R_{eq}$ of the load 115 and the inductance $L_r$ of the load 115.

Conversely, when the working coil 110 is operating, the controller 160 detects the voltage value $V_c$ of the resonant capacitor 120 through the first voltage sensor 140 (S720).

Also, the controller 160 detects the supply voltage value $V_{ab}$ through the second voltage sensor 150 (S730). Here, although an embodiment in which operation S720 is performed prior to operation S730 is illustrated in the drawing, unlike this, operation S730 may be performed prior to operation S720, or operation S720 and operation S730 may be simultaneously performed.

Next, the controller 160 calculates the RMS value $I_{RMS(1)}$ of the first harmonic $I_{r(1)}$ of the resonant current $I_r$ (S740). Here, the controller 160 may calculate the RMS value $I_{RMS(1)}$ of the first harmonic $I_{r(1)}$ based on Equation 1 above.

Also, the controller 160 calculates the phase $\theta_1$ of the first harmonic $I_{r(1)}$ of the resonant current $I_r$ (S750). Here, although an embodiment in which operation S740 is performed prior to operation S750 is illustrated in the drawing, unlike this, operation S750 may be performed prior to operation S740, or operation S740 and operation S750 may be simultaneously performed.

Next, the controller 160 calculates the resistance value $R_{eq}$ of the load 115 (S760). Here, the controller 160 may calculate the resistance value $R_{eq}$ of the load 115 based on Equation 3 above.

Then, the controller 160 calculates the inductance $L_r$ of the load 115 (S770). Here, the controller 160 may calculate the inductance $L_r$ of the load 115 based on Equation 4 above. Here, although an embodiment in which operation S760 is performed prior to operation S770 is illustrated in the drawing, unlike this, operation S770 may be performed prior to operation S760, or operation S760 and operation S770 may be simultaneously performed. Also, any one of operation S760 and operation S770 may be omitted as necessary.

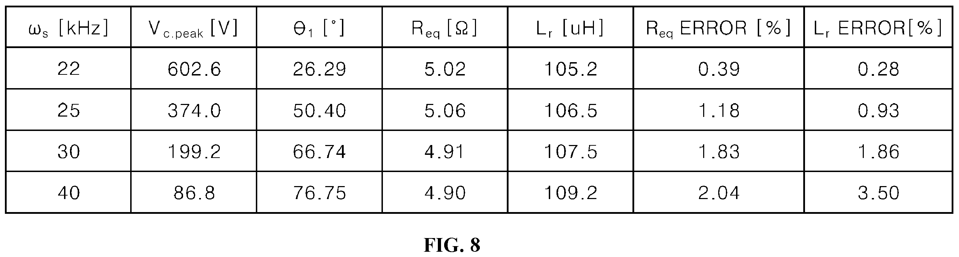

The results of calculating the resistance value $R_{eq}$ of the load 115 and the inductance $L_r$ of the load 115 using the above-described induction heating device 100 and method of controlling the induction heating device 100 can be seen in FIG. 8.

FIG. 8 is a table showing a resistance value of a load, an inductance of the load, and errors thereof which are calculated through the induction heating device and the method of controlling the induction heating device according to one embodiment of the present disclosure.

The table of FIG. 8 shows results of calculating the resistance value $R_{eq}$ of the load 115 and the inductance $L_r$ of the load 115 while changing the switching frequency $\omega_s$ of the switching elements SW1, SW2, SW3, and SW4 included in the inverter circuit 130 when the capacitance $C_r$ of the resonant capacitor 120 is 600 nF, and an AC voltage of 220 V is supplied through the external power supply 300. Here, the calculation was performed with the actual resistance value $R_{eq}$ of the load 115 set as 5 $\Omega$ and the actual inductance $L_r$ thereof set as 105.5 $\mu$H.

First, when the switching frequency $\omega_s$ is 22 kHz, the peak value $V_{c\_peak}$ of the voltage value $V_c$ of the resonant capacitor 120 is detected as 602.6 V, and the phase $\theta_1$ of the first harmonic $I_{r(1)}$ of the resonant current $I_r$ is calculated as 26.29°, and thus the resistance value $R_{eq}$ of the load 115 is calculated as 5.02 $\Omega$, and the inductance $L_r$ of the load 115 is calculated as 105.2 $\mu$H. That is, the resistance value $R_{eq}$ of the load 115 has an error of 0.39% from the actual value, and the inductance $L_r$ of the load 115 has an error of 0.28% from the actual value.

Also, when the switching frequency $\omega_s$ is 25 kHz, the peak value $V_{c\_peak}$ of the voltage value $V_c$ of the resonant capacitor 120 is detected as 374.0 V, and the phase $\theta_1$ of the first harmonic $I_{r(1)}$ of the resonant current $I_r$ is calculated as 50.40°, and thus the resistance value $R_{eq}$ of the load 115 is calculated as 5.06 $\Omega$, and the inductance $L_r$ of the load 115 is calculated as 106.5 $\mu$H. That is, the resistance value $R_{eq}$ of the load 115 has an error of 1.18% from the actual value, and the inductance $L_r$ of the load 115 has an error of 0.93% from the actual value.

Also, when the switching frequency $\omega_s$ is 30 kHz, the peak value $V_{c\_peak}$ of the voltage value $V_c$ of the resonant capacitor 120 is detected as 199.2 V, and the phase $\theta_1$ of the first harmonic $I_{r(1)}$ of the resonant current $I_r$ is calculated as 66.74°, and thus the resistance value $R_{eq}$ of the load 115 is calculated as 4.91 $\Omega$, and the inductance $L_r$ of the load 115 is calculated as 107.5 $\mu$H. That is, the resistance value $R_{eq}$ of the load 115 has an error of 1.83% from the actual value, and the inductance $L_r$ of the load 115 has an error of 1.86% from the actual value.

Also, when the switching frequency $\omega_s$ is 40 kHz, the peak value $V_{c\_peak}$ of the voltage value $V_c$ of the resonant capacitor 120 is detected as 86.8 V, and the phase $\theta_1$ of the first harmonic $I_{r(1)}$ of the resonant current $I_r$ is calculated as 76.75°, and thus the resistance value $R_{eq}$ of the load 115 is calculated as 4.90 $\Omega$, and the inductance $L_r$ of the load 115 is calculated as 109.2 $\mu$H. That is, the resistance value $R_{eq}$ of the load 115 has an error of 2.04% from the actual value, and the inductance $L_r$ of the load 115 has an error of 3.50% from the actual value.

In this way, even when the switching frequency $\omega_s$ changes, the resistance value $R_{eq}$ of the load 115 and the inductance $L_r$ of the load 115 can be calculated with a small error of less than 5%.

By the above-described induction heating device 100 and method of controlling the induction heating device 100 according to one embodiment of the present disclosure, because at least one of the resistance value $R_{eq}$ of the load 115 and the inductance $L_r$ of the load 115 is calculated based on the voltage value $V_c$ of the resonant capacitor 120 and the supply voltage value $V_{ab}$, the impedance of the load 115 can be accurately calculated without using a high-performance controller. Accordingly, the output power of the induction heating device 100 can be more precisely controlled by the controller 160, and the temperature of the working coil 110 can be more accurately estimated.

Embodiments of the present disclosure have been described above with reference to the accompanying drawings, but the present disclosure is not limited by the embodiments and drawings disclosed herein, and it is apparent that various modifications may be made by those of ordinary skill in the art. Further, even if effects according to configurations of the present disclosure have not been explicitly described in the above description of the embodiments of the present disclosure, predictable effects of the corresponding configurations should also be acknowledged.

## Claims

1. An induction heating device comprising:

   a working coil disposed at a position corresponding to a heating area, where an object to be heated is placed, and configured to form a load together with the object to be heated;
   a resonant capacitor configured to form a resonant circuit together with the working coil;
   an inverter circuit configured to include a plurality of switching elements and supply a current to the working coil;
   a first voltage sensor configured to measure a voltage value applied to the resonant capacitor;
   a second voltage sensor configured to measure a supply voltage value supplied to the resonant circuit through the inverter circuit; and
   a controller configured to, during an operation of the working coil, calculate at least one of a resistance value of the load and an inductance of the load based on the voltage value of the resonant capacitor and the supply voltage value.

2. The induction heating device of claim 1, wherein the controller configured to:

   calculate a root mean square (RMS) value of a first harmonic of the current flowing in the resonant circuit based on the voltage value of the resonant capacitor;
   calculate a phase of the first harmonic of the current flowing in the resonant circuit based on the voltage value of the resonant capacitor and the supply voltage value; and
   calculate at least one of the resistance value of the load and the inductance of the load based on the RMS value of the first harmonic of the current flowing in the resonant circuit and the phase of the first harmonic of the current flowing in the resonant circuit.

3. The induction heating device of claim 2, wherein the controller configured to calculate the RMS value of the first harmonic of the current flowing in the resonant circuit based on the voltage value of the resonant capacitor, a capacitance of the resonant capacitor, and a switching frequency of the switching elements included in the inverter circuit.

4. The induction heating device of claim 2, wherein the controller configured to:

   calculate a phase of the current flowing in the resonant circuit based on the voltage value of the resonant capacitor; and
   calculate the phase of the first harmonic of the current flowing in the resonant circuit based on the phase of the current flowing in the resonant circuit and the supply voltage value.

5. The induction heating device of claim 2, wherein the controller configured to calculate the resistance value of the load based on the supply voltage value, the RMS value of the first harmonic of the current flowing in the resonant circuit, and the phase of the first harmonic of the current flowing in the resonant circuit.

6. The induction heating device of claim 2, wherein the controller configured to calculate the inductance of the load based on the supply voltage value, the RMS value of the first harmonic of the current flowing in the resonant circuit, the phase of the first harmonic of the current flowing in the resonant circuit, the capacitance of the resonant capacitor, and the switching frequency of the switching elements included in the inverter circuit.

7. A method of controlling an induction heating device including a working coil disposed at a position corresponding to a heating area, where an object to be heated is placed, and configured to form a load together with the object to be heated, a resonant capacitor configured to form a resonant circuit together with the working coil, an inverter circuit configured to include a plurality of switching elements and supply a current to the working coil, a first voltage sensor configured to measure a voltage value applied to the resonant capacitor, a second voltage sensor configured to measure a supply voltage value supplied to the resonant circuit through the inverter circuit, and a controller, the method comprising:

   determining, by the controller, whether the working coil is operating;
   measuring, by the first voltage sensor, the voltage value of the resonant capacitor;
   measuring, by the second voltage sensor, the supply voltage value; and
   calculating, by the controller, at least one of a resistance value of the load and an inductance of the load based on the voltage value of the resonant capacitor and the supply voltage value.

8. The method of claim 7, wherein the calculating, by the controller, of at least one of a resistance value of the load and an inductance of the load based on the voltage value of the resonant capacitor and the supply voltage value includes:

   calculating, by the controller, a root mean square (RMS) value of a first harmonic of the current flowing in the resonant circuit based on the voltage value of the resonant capacitor;
   calculating, by the controller, a phase of the first harmonic of the current flowing in the resonant circuit based on the voltage value of the resonant capacitor and the supply voltage value; and
   calculating, by the controller, at least one of the resistance value of the load and the inductance of the load based on the RMS value of the first harmonic of the current flowing in the resonant circuit and the phase of the first harmonic of the current flowing in the resonant circuit.

9. The method of claim 8, wherein the calculating, by the controller, of an RMS value of a first harmonic of the current flowing in the resonant circuit based on the voltage value of the resonant capacitor includes calculating, by the controller, an RMS value of the first harmonic of the current flowing in the resonant circuit based on the voltage value of the resonant capacitor, a capacitance of the resonant capacitor, and a switching frequency of the switching elements included in the inverter circuit.

10. The method of claim 8, wherein the calculating, by the controller, of a phase of the first harmonic of the current flowing in the resonant circuit based on the voltage value of the resonant capacitor and the supply voltage value includes:

    calculating, by the controller, a phase of the current flowing in the resonant circuit based on the voltage value of the resonant capacitor; and
    calculating, by the controller, the phase of the first harmonic of the current flowing in the resonant circuit based on the phase of the current flowing in the resonant circuit and the supply voltage value.

11. The method of claim 8, wherein the calculating, by the controller, of at least one of the resistance value of the load and the inductance of the load based on the RMS value of the first harmonic of the current flowing in the resonant circuit and the phase of the first harmonic of the current flowing in the resonant circuit includes calculating, by the controller, the resistance value of the load based on the supply voltage value, the RMS value of the first harmonic of the current flowing in the resonant circuit, and the phase of the first harmonic of the current flowing in the resonant circuit.

12. The method of claim 8, wherein the calculating, by the controller, of at least one of the resistance value of the load and the inductance of the load based on the RMS value of the first harmonic of the current flowing in the resonant circuit and the phase of the first harmonic of the current flowing in the resonant circuit includes calculating, by the controller, the inductance of the load based on the supply voltage value, the RMS value of the first harmonic of the current flowing in the resonant circuit, the phase of the first harmonic of the current flowing in the resonant circuit, a capacitance of the resonant capacitor, and a switching frequency of the switching elements included in the inverter circuit.

**FIG. 1**

FIG. 2

**FIG. 3**

**FIG. 4**

**FIG. 5**

**FIG. 6**

```
                      ┌──────────┐
                      │  START   │
                      └──────────┘
                            │
                            ▼
              ╱─────────────────────────╲
      NO     ╱            IS              ╲
   ◄────────        WORKING COIL           ─────  S710
             ╲        OPERATING?          ╱
              ╲─────────────────────────╱
                            │
                          YES
                            ▼
              ┌─────────────────────────┐
              │  DETECT VOLTAGE VALUE OF │─── S720
              │    RESONANT CAPACITOR    │
              └─────────────────────────┘
                            │
                            ▼
              ┌─────────────────────────┐
              │ DETECT SUPPLY VOLTAGE VALUE│── S730
              └─────────────────────────┘
                            │
                            ▼
              ┌─────────────────────────┐
              │    CALCULATE Irms(1)     │─── S740
              └─────────────────────────┘
                            │
                            ▼
              ┌─────────────────────────┐
              │      CALCULATE θ1        │─── S750
              └─────────────────────────┘
                            │
                            ▼
              ┌─────────────────────────┐
              │  CALCULATE RESISTANCE    │─── S760
              │     VALUE OF LOAD        │
              └─────────────────────────┘
                            │
                            ▼
              ┌─────────────────────────┐
              │  CALCULATE INDUCTANCE    │─── S770
              │       OF LOAD            │
              └─────────────────────────┘
                            │
                            ▼
                      ┌──────────┐
                      │   END    │
                      └──────────┘
```

Detecting steps: $I_{rms(1)}$ (S740), $\theta_1$ (S750).

**FIG. 7**

| $\omega_s$ [kHz] | $V_{c.peak}$ [V] | $\theta_1$ [°] | $R_{eq}$ [Ω] | $L_r$ [uH] | $R_{eq}$ ERROR [%] | $L_r$ ERROR[%] |
|---|---|---|---|---|---|---|
| 22 | 602.6 | 26.29 | 5.02 | 105.2 | 0.39 | 0.28 |
| 25 | 374.0 | 50.40 | 5.06 | 106.5 | 1.18 | 0.93 |
| 30 | 199.2 | 66.74 | 4.91 | 107.5 | 1.83 | 1.86 |
| 40 | 86.8 | 76.75 | 4.90 | 109.2 | 2.04 | 3.50 |

**FIG. 8**

## INTERNATIONAL SEARCH REPORT

| International application No. |
| --- |
| **PCT/KR2022/001130** |

| A. | CLASSIFICATION OF SUBJECT MATTER |
| --- | --- |
| | **H05B 6/06**(2006.01)i; **H05B 6/12**(2006.01)i |

According to International Patent Classification (IPC) or to both national classification and IPC

| B. | FIELDS SEARCHED |
| --- | --- |

Minimum documentation searched (classification system followed by classification symbols)

H05B 6/06(2006.01); H02J 50/12(2016.01); H05B 37/02(2006.01); H05B 6/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유도가열(inductive heating), 워킹코일(working coil), 공진 커패시터(resonant capacitor), 인버터(inverter), 전압 센서(voltage sensor), 저항값(resistance value), 인덕턴스(inductance)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-1423832 B1 (POSCO ICT CO., LTD.) 25 July 2014 (2014-07-25)<br>See paragraphs [0005] and [0035]-[0043]; claim 1; and figures 1-4. | 1-12 |
| A | JP 2016-119318 A (YANG, Tai He) 30 June 2016 (2016-06-30)<br>See paragraphs [0121]-[0146]; and figures 11-12. | 1-12 |
| A | KR 10-2019-0043984 A (LG ELECTRONICS INC.) 29 April 2019 (2019-04-29)<br>See claims 1-4; and figures 2-3. | 1-12 |
| A | WO 2011-155200 A1 (PANASONIC CORPORATION et al.) 15 December 2011 (2011-12-15)<br>See claim 7. | 1-12 |
| A | JP 2020-064719 A (HITACHI GLOBAL LIFE SOLUTIONS INC) 23 April 2020 (2020-04-23)<br>See claims 1-4; and figures 1-2. | 1-12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 April 2022** | **29 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

<table>
<tr><td colspan="2">International application No.</td></tr>
<tr><td colspan="2">**PCT/KR2022/001130**</td></tr>
</table>

| Patent document cited in search report | | | Publication date (day/month/year) | Patent family member(s) | | | Publication date (day/month/year) |
|---|---|---|---|---|---|---|---|
| KR | 10-1423832 | B1 | 25 July 2014 | KR 10-2014-0038119 | | A | 28 March 2014 |
| JP | 2016-119318 | A | 30 June 2016 | JP | 2012-028306 | A | 09 February 2012 |
| | | | | JP | 3168200 | U | 02 June 2011 |
| | | | | JP | 5981689 | B2 | 31 August 2016 |
| | | | | JP | 6236490 | B2 | 22 November 2017 |
| | | | | KR 10-2012-0011771 | | A | 08 February 2012 |
| KR | 10-2019-0043984 | A | 29 April 2019 | EP | 3474629 | A1 | 24 April 2019 |
| | | | | EP | 3474629 | B1 | 02 December 2020 |
| | | | | US | 11064576 | B2 | 13 July 2021 |
| | | | | US | 2019-0124727 | A1 | 25 April 2019 |
| WO | 2011-155200 | A1 | 15 December 2011 | JP | 2013-155200 | A1 | 01 August 2013 |
| JP | 2020-064719 | A | 23 April 2020 | None | | | |

Form PCT/ISA/210 (patent family annex) (July 2019)